# EUROPEAN PATENT SPECIFICATION

(11) **EP 1 998 458 B1**
(45) Date of publication and mention of the grant of the patent: **09.11.2016**
(21) Application number: 08156588.9
(22) Date of filing: 20.05.2008
(51) Int. Cl.: H04B 1/38, H04M 1/02

(54) **Dual mode mobile terminal and method for providing communication mode**
Mobiles Dualmodus-Endgerät und Verfahren zur Kommunikationsbereitstellung dafür
Terminal mobile à deux modes et procédé de fourniture du mode de communication

(30) Priority: 29.05.2007 KR 20070051953
(43) Date of publication of application: 03.12.2008
(73) Proprietor: Samsung Electronics Co., Ltd., Suwon-si, Gyeonggi-do, 443-742 (KR)
(72) Inventor: Kim, Ji Eun, Bangbaebon-dong, Seocho-gu, Seoul (KR)
(74) Representative: Birchenough, Lewis

(56) References cited:
- WO-A1-2005/069657
- DE-A1- 19 823 074
- GB-A- 2 413 736

## Description

### TECHNICAL FIELD OF THE INVENTION

The present invention relates to a mobile terminal and, in particular, to a dual mode (dual standby) mobile terminal and a method for providing communication mode for a dual mode mobile terminal that is capable of facilitating mode switching manipulation.

### BACKGROUND OF THE INVENTION

Dual mode mobile terminal is a device that can operate on two different network standards.

Typically, a dual mode mobile terminal is provided with two subscriber identity module (SIM) card slots such that the operation modes of the mobile phone are determined by the inserted SIM cards.

In a case that a Code Division Multiple Access User Identity Module (CDMA UIM) is inserted into one slot while no SIM or UIM card is in the other slot, the dual mode mobile terminal is supposed to operate as a single mode mobile phone, i.e. the dedicated CDMA mobile phone.

In another case that a global system for mobile communications (GSM) subscriber identity module (SIM) and CDMA UIM cards are inserted into respective card slots of the dual mode mobile terminal, it can operate in one of CDMA and GSM modes or both, i.e. in dual standby mode.

However, such dual mode mobile terminal is limited in combination of operation modes due to the carriers' requirements and technical restrictions as well as types of cards. For example, any dual mode mobile terminal is so configured such that two identity cards of the same communication standard are not allowed to be attached simultaneously and the GSM mode cannot be selected as the main operation mode.

In the conventional dual mode mobile terminal, the operation mode is selected in an initial booting process or by user manually later. During the mode selection process, the mobile phone checks the identity cards inserted within the card slots and displays an identity card list on the screen such that the user can set a combination of the operation modes with main mode. Typically, when the combination of the operation modes is inappropriate, the mobile phone alerts the user to reset the combination of the operation modes.

For example, if the CDMA mode is designated for both the card slots, the mobile phone may output an alarm message notifying that an identical operation mode cannot be designated for two card slots.

However, such conventional mode selection procedure of a dual mode mobile terminal requires repeated reset manipulation for finding out an appropriate combination of operation modes, resulting in time consumption and user inconvenience.

GB 2413736 describes a mobile phone capable of holding more than one SMS chip. A multi-chip selector is used to manually or automatically switch between the chips to allow signals to be received from different networks. A screen is provided which displays caller ID, signal strength and network connections for each chip.

DE 19823074 describes a mobile station capable of receiving two or more SIM cards. The SIM cards can be individually enabled and disabled by a user. A menu function is provided which displays the activated and deactivated SIM cards. A means for indicating which of the SIM cards are registered in, or rejected by, a network is also provided.

WO 2005/069657 describes a mobile terminal including two SIM cards, where a SIM card is selected automatically according to defined rules.

### SUMMARY OF THE INVENTION

To address the above-discussed deficiencies of the prior art, it is a primary object of the present disclosure to provide a dual mode (dual standby) mobile terminal and a method for providing a communication mode configuration interface of a dual mode mobile terminal that is capable of facilitating mode configuration manipulation.

Also, the present invention provides a dual mode mobile terminal and a method for providing a communication mode configuration interface of a dual mode mobile terminal that is capable of presenting available combinations of communication modes supported by at least one currently attached identity card.

In accordance with one aspect of the present invention, there is provided a method for providing a communication mode of a multi-mode mobile terminal having at least two identity card slots, comprising: ruling out incompatible communication modes combinations so as to prevent selection of an unavailable communication mode combination; displaying a mode selection screen composed of a first display window for presenting at least one primary available communication mode selectable from at least one identity card detected in the identity card slots and a second display window for presenting at least one secondary available communication mode selectable from the at least one identity card; and selecting a network corresponding to a communication mode selected on the mode selection screen.

In accordance with another aspect of the present invention, there is provided a dual-mode mobile terminal having at least two identity card slots, a first communication module for processing signals in a first communication mode, and a second communication module for processing signals in a second communication mode, comprising: a display unit for displaying a mode selection screen; a storage unit for storing information on available identity cards and communication mode combinations; and a control unit for ruling out incompatible communication modes combinations so as to prevent selection of an unavailable communication mode combination, controlling the display unit to display the mode selection screen composed of a first display window for presenting at least one primary available communication mode selectable from at least one identity card detected in the identity card slots (110, 120) and a second display window for presenting at least one secondary available communication mode selectable from the at least one identity card, and controlling the first and second communication modules to select a network corresponding to a communication mode selected on the mode selection screen.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIGURE 1 is a block diagram illustrating a dual mode mobile terminal according to an exemplary embodiment of the present invention;
FIGURE 2 is a diagram illustrating steps of a communication mode selection procedure of the dual mode mobile terminal according to an exemplary embodiment of the present invention;
FIGURE 3 is a diagram illustrating steps of a communication mode selection procedure of a dual mode mobile terminal according to another exemplary embodiment of the present invention;
FIGURE 4 is a diagram illustrating steps of a communication mode selection procedure of a dual mode mobile terminal according to an exemplary embodiment of the present invention; and
FIGURE 5 is a flowchart illustrating a communication mode configuration method according to an exemplary embodiment of the present invention.

### DETAILED DESCRIPTION OF THE INVENTION

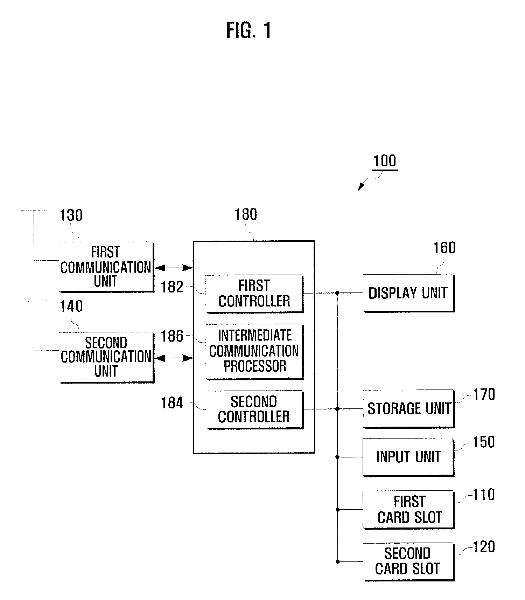

FIGURES 1 through 5, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged wireless communication system.

FIGURE 1 is a block diagram illustrating a dual mode mobile terminal according to an exemplary embodiment of the present invention.

In FIGURE 1, the dual mode mobile terminal 100 includes two card slots 110 and 120, a first communication unit 130 to operate the mobile terminal in a first communication mode, a second communication unit 140 to operate the mobile terminal in a second communication mode, an input unit 150 to receive user commands, a display unit 160 to provide a communication mode configuration interface screen, a storage unit 170 to store information on available identify cards and available combination of communication modes, and a control unit 180.

Each of the first and second card slots 110 and 120 can receive an identity card (SIM or UIM) such as CDMA, GSM, Wireless Broadband (WiBro), high speed downlink packet access (HSDPA) cards. The identity card inserted into one of the first and second card slots 110 and 120 may include information on the network operator.

A main communication mode of the mobile terminal is determined by the identity card inserted into the first card slot 110 such that the mobile terminal 100 can operate in the CDMA, GSM, WiBro, or HSDPA mode. A secondary communication mode of the mobile terminal can be one of the rest communication modes except for the main communication mode. That is, one communication mode cannot be designated for the first and secondary communication units 130 and 140 simultaneously.

The control unit 180 includes a first controller 182 for controlling the first communication unit 130, a second controller 184 for controlling the second communication unit 140, and an intermediate communication processor 186 for processing intercommunication between the first and second controller 182 and 184.

One of the first and second control controllers 182 and 184 can be designated as a primary controller for controlling cooperation of the internal units and the other as a secondary controller for controlling the operation associated with the secondary operation mode. The roles of the primary and secondary controllers 182 and 184 can be interchanged according to the circumstance.

When the a mode selection option is activated, the control unit 180 controls the display unit 160 to display an available mode combination list formatted in accordance with the identity cards seated within the first and second card slots 110 and 120 on its screen so as to prevent the user to select an unavailable mode combination.

The mode selection option allows the user to select a mode combination from the available communication mode combination list provided by the mobile terminal.

The control unit 180 can restrict the secondary communication mode of the mobile terminal 100 depending on the first communication mode. Ruling out the incompatible communication modes prevents the user from selecting unavailable secondary communication mode.

In a case that an automatic mode selection option is enabled, the control unit 180 configures a preferred communication mode pairs on the basis of the identity card inserted into one of the first and second card slots 110 and 120. That is, if an identity card is inserted into one of the first and second card slots 110 and 120, the control unit 180 determines another communication mode available with the other card slot and displays the selected communication mode on the screen of the display unit 160.

Table 1 shows available communication mode combinations for a dual mode mobile terminal. Table 1 informs of compatibilities of identity cards and communication modes.

**Table 1**

| Index | SLOT 1 | | SLOT 2 | | Availability |
|---|---|---|---|---|---|
| | CARD | MODE | CARD | MODE | |
| 1 | CDMA | CDMA | Empty | - | Available |
| 2 | CDMA | CDMA | GSM | Not Selected | Available |
| 3 | CDMA | CDMA | GSM | GSM | Available |
| 4 | CDMA | CDMA | CDMA | Not Selected | Available |
| 5 | CDMA | CDMA | CDMA | CDMA | Unavailable |
| 6 | CDMA | CDMA | Dual | Not Selected | Available |
| 7 | CDMA | CDMA | Dual | GSM | Available |
| 8 | CDMA | CDMA | Dual | CDMA | Unavailable |
| 9 | Dual | CDMA | Empty | - | Available |
| 10 | Dual | CDMA | GSM | Not Selected | Available |
| 11 | Dual | CDMA | GSM | GSM | Available |
| 12 | Dual | CDMA | CDMA | Not Selected | Available |
| 13 | Dual | CDMA | CDMA | CDMA | Unavailable |
| 14 | Dual | CDMA | Dual | Not Selected | Available |
| 15 | Dual | CDMA | Dual | GSM | Available |
| 16 | Dual | CDMA | Dual | CDMA | Unavailable |
| 17 | GSM | * | * | * | Unavailable |
| 18 | Dual | GSM | Empty | - | Available |
| 19 | Dual | GSM | GSM | Not Selected | Available |
| 20 | Dual | GSM | GSM | GSM | Unavailable |
| 21 | Dual | GSM | CDMA | Not Selected | Available |
| 22 | Dual | GSM | CDMA | CDMA | Available |
| 23 | Dual | GSM | Dual | Not Selected | Available |
| 24 | Dual | GSM | Dual | GSM | Unavailable |
| 25 | Dual | GSM | Dual | CDMA | Available |
| 26 | Empty | - | GSM | CSM | Available |
| 27 | Empty | - | CDMA | CDMA | Available |
| 28 | Empty | - | Dual | GSM | Available |
| 29 | Empty | - | Dual | CDMA | Available |
| 30 | Empty | - | Empty | - | Unavailable |

In Table 1, the GSM SIM card is unavailable for the first identity card slot 110 as indicated by index 17, and the two identity cards of the same communication standard are unavailable for simultaneous usage within two card slots as indicated by index 5, 8, 13, 16, 20, 24.

Although the CDMA UIM and GSM SIM cards are compatible in Table 1, the present invention is not limited thereto. For example, the dual mode mobile terminal of the present invention can be configured such that the CDMA UIM card can be compatibly activated with a WiBro card but not with the GSM SIM card according to the policies of the carriers and standard organizations. Although, it is described that the mode combination information contains the communication modes, it may further contain network operator modes. Also, the network operator modes can be stored within the storage unit 170 in the form of the table 1. Accordingly, when the mode selection request command is input, the mode combination information is displayed together with the available cards and network operator modes.

In a case that two dual standard identity cards are inserted into the first and second card slots 110 and 120 respectively, the communication modes of the mobile terminal can be configured as in indexes 14 to 16 and 23 to 25. In this case, the control unit 180 displays a mode configuration screen by means of the display unit 160 in order for the user to select the communication modes for respective identity cards.

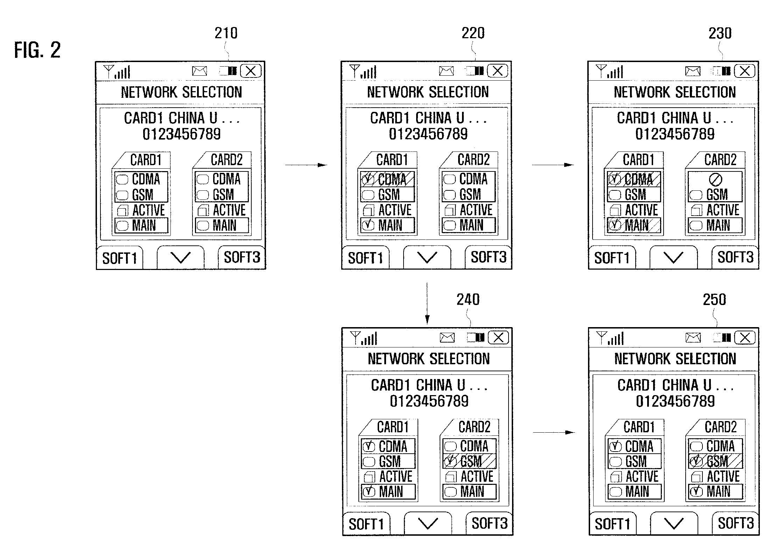

FIGURE 2 is a diagram illustrating steps of a communication mode selection procedure of the dual mode mobile terminal according to an exemplary embodiment of the present invention.

Referring to FIGURE 2, the control unit 180 controls the display unit 160 to display the communication modes supported by the identity cards detected in the first and second card slots 110 and 120 in a first display window and a second display window, respectively. For example, if the cards detected in the first and second card slots 120 and 140 are dual standard identity cards, the control unit 180 controls such that the first and second display windows present the respective CDMA mode and GSM mode as shown in the screen image 210 of FIGURE 2.

Accordingly, the user can select one of the GSM and CDMA modes with reference to communication modes appeared in the first and second display windows in association with the first and second card slots 110 and 120. The screen image 210 shows that both the identity cards inserted into the first and second card slots 110 and 120 are CDMA-GSM dual standard identity cards.

The user can select a CDMA mode for the identity card of the first card slot 110 and designate the CDMA mode as the main communication mode as shown in the screen image 220. If the CDMA mode of the dual standard identity card inserted into the first card slot 110 as indicated by the indexes 14 to 16 in Table 1, the CDMA mode is unavailable with the identity card of the second card slot 120. Accordingly, the control unit 180 disables the CDMA option of the identity card inserted into the second card slot 120 as shown in the screen image 230.

Also, the control unit can automatically select the GSM mode of the identity card of the second card slot 120 as shown in the screen image 240 (see index 15 in Table 1).

While the screen image 240 is displayed on the screen, the user can change the main communication mode by checking the "main" option of the identity card inserted into the second card slot 120 as shown in the screen image 250. In this case the "main" option of the identity card of the first card slot 120 is automatically unchecked.

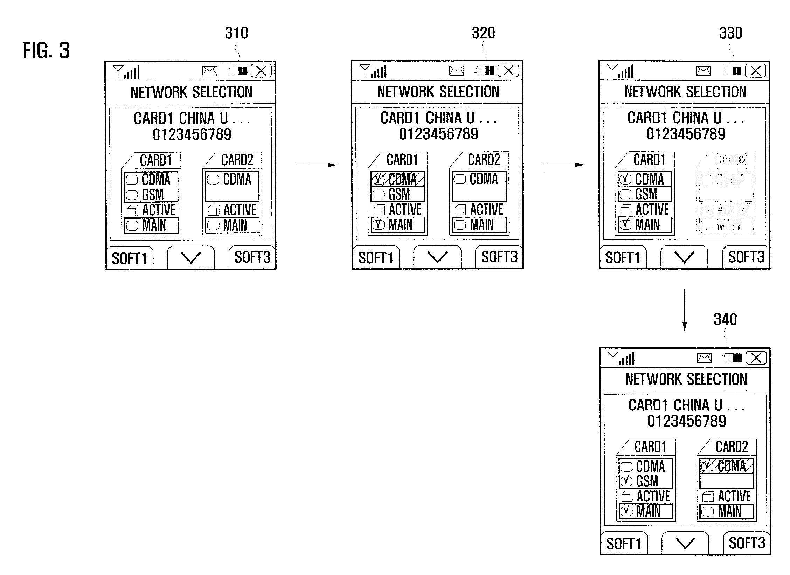

FIGURE 3 is a diagram illustrating steps of a communication mode selection procedure of a dual mode mobile terminal according to another exemplary embodiment of the present invention.

Referring to FIGURE 3, a dual standard identity card is inserted into the first card slot 110, and a CDMA UIM card is inserted into the second card slot 120 as shown in screen image 310 (see indexes 12, 13, 21, and 22 in Table 1).

In this case, the control unit 180 displays a mode configuration screen 310. The screen image 310 presents available communication modes supported by the identity cards inserted within the first and second card slots 110 and 120 together with respective check boxes such that the user can selects one of the CDMA and GSM modes of the first identity card by checking its check box and CDMA mode of the second identity card as shown in the screen image 320.

If the CDMA mode is selected for the first identity card, the CDMA mode of the second identity card cannot be selected according to the constraints of Table 1 (see indexes 12 and 13), whereby the control unit 180 deactivates the CDMA mode option of the second identity card as shown in the screen image 330. If a check box of the GSM mode of the first identity card is checked by the user while the screen image 330 is presented, the check box of the CDMA mode is unchecked and the CDMA mode of the second identity card is activated such that the user can configure the GSM mode for the first identity card as the main communication mode and the CDMA mode for the second identity card as shown in the screen image 340 (see index 22 in Table 1).

If a user command for requesting information on available communication mode combination is input, the control unit 180 checks the types of the identity cards inserted within the first and second card slots 110 and 120 and presents the communication modes and mode combinations available with the current identity cards on the screen of the display unit 160.

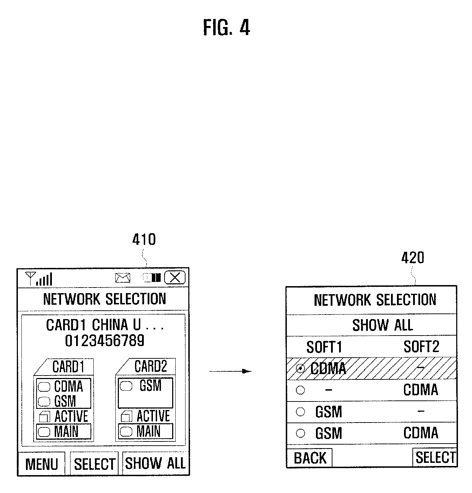

FIGURE 4 is a diagram illustrating steps of a communication mode selection procedure of a dual mode mobile terminal according to an exemplary embodiment of the present invention.

If the first identity card inserted within the first card slot 110 is a dual standard identity card and the second identity card is a dedicated GSM SIM card (refer to indexes 10, 11, 19, and 20 in Table 1), the control unit 180 displays the mode configuration screen formatted as in the screen image 410 of FIGURE 4 in which the CDMA and GSM options of the first identity card and the CDMA. If a "show all" command is input while the mode configuration screen is displayed, the control unit 180 presents the available communication mode and mode combinations with the first and second identity cards in the form of a communication mode list as shown in the screen image 420. Accordingly, the user can configure at least one communication mode of the mobile terminal 100 by selecting an item from the communication mode list. In a case that the communication mode list is too long to present on the screen, the screen is provided with a scroll bar such that the user can navigate all available communication modes.

Although not shown in drawings, the dual mode mobile terminal 100 can be provided with at least one of a camera module, a broadcast receiver module, an audio output module such as speaker, an audio input module such as microphone, a data port for exchanging data with exterior device, a charger port, and a multimedia player module such as MP3 player.

Although not all kinds of function modules that can be converged with the mobile terminal are listed, it is obvious to those skilled in the art that the dual mode mobile terminal can integrate various function modules and their equivalents.

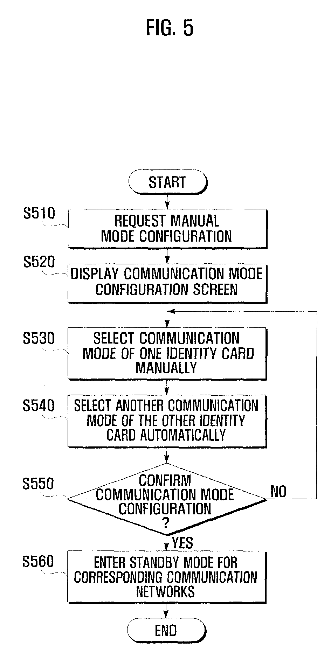

FIGURE 5 is a flowchart illustrating a communication mode configuration method according to an exemplary embodiment of the present invention.

Referring to FIGURE 5, if a mode configuration command is detected (S510), the control unit 180 of the dual mode mobile terminal 100 displays a communication mode configuration screen by means of the display unit 160 (S520). The communication mode configuration mode screen is provided with communication modes available with identity cards inserted within the first and second card slots 110 and 120.

For example, if two dual standard identity cards are detected within the respective first and second card slots 110 and 120, the control unit 180 controls to display the mode configuration screen formatted as the screen image 210 of FIGURE 2, whereas, if a dual standard identity card and a CDMA UIM card are detected within the respective first and second card slots 110 and 120, the control unit 180 controls the display of the mode configuration screen formatted as the screen image 310 of FIGURE 3. At this time, if a user command for requesting to show all available communication mode combinations is detected, the control unit 180 composes an available communication mode combination list on the basis of the communication modes supported by the identity cards inserted within the first and second card slots 110 and 120 and presents the available communication mode combination list by means of the display unit 160.

Next, the control unit 180 detects a mode command for selecting a specific communication mode of one of the two identity cards inserted within the first and second card slots 110 and 120 (S530). If the mode selection command is detected, the control unit 180 configures the mobile terminal 100 with the selected communication mode and activates the communication mode of the identity card of the second card slot 120 that is compatible with the previously selected communication mode (S540).

In the case that dual standard identity cards are detected within both the card slots 110 and 120 and the CDMA mode of the first identity card is selected as shown in the screen image 220 of FIGURE 2, the control unit 180 composes a screen image 230 of FIGURE 2 in which the first identity card is set as the main card and the CDMA mode of the second card is deactivated.

In the case that a dual standard identity card and a CDMA UIM card are detected within the respective first and second card slot 110 and 120 (see screen image 310 of FIGURE 3) and CDMA mode of the dual standard identity card is selected as shown in the screen image 320 of FIGURE 3, the control unit 180 sets the dual standard identity card as the main card and deactivates the CDMA mode of the CDMA UIM card as shown in the screen image 330 of FIGURE 3.

Next, the control unit 180 determines whether a user command for confirming the communication mode configuration is input (S550). If a user confirmation command is detected, the control unit 180 configures the mobile terminal 100 with the communication modes such that the mobile terminal enters the standby mode for the corresponding communication networks (S560). Preferably, the mobile terminal 100 operates in a dual standby mode so as to communicate with two different networks.

If a rejection command is detected at step S550, the control unit 180 repeats steps S530 to S550 in order for the user to select another communication mode combination.

In the above description, how the communication mode selection is performed in association with the identity cards inserted into the card slots of the dual-mode mobile terminal. The present invention can be applied to a network operator mode selection. For example, when a communication mode selection is requested while the identity cards are inserted within the first and second card slots 110 and 120, the control unit 180 controls such that a mode selection screen presenting available network operator modes is displayed. If a network operator mode is selected on the mode selection screen in association with one of the first and second card slots 110 and 120, the control unit 180 configures the card slot with the selected network operator mode on the basis of the information on the identity card detected in the card slot and the previously stored service mode combinations. Accordingly, when a mode selection is requested in the mobile terminal using a network operator-specific SIM card such as Vodafone, the user can select a network operator from the identity cards inserted in the card slots.

As described above, the dual mode mobile terminal and communication mode configuration method thereof according to the present invention provide a user with a communication mode configuration screen listing available communication mode combinations obtained in consideration of the compatibilities of the communication modes supported by two identity cards, thereby facilitating configuration of the dual communication modes by selecting a mode combination item on the mode configuration screen.

Also, the dual mode mobile terminal and communication mode configuration method thereof according to the present invention is advantageous in user convenience since the second communication mode is automatically selected by the mobile terminal in consideration of the compatibility with the first communication mode selected by the user.

Although the present disclosure has been described with an exemplary embodiment, various changes and modifications may be suggested to one skilled in the art. It is intended that the present disclosure encompass such changes and modifications as fall within the scope of the appended claims.

## Claims

1. A method for providing a communication mode of a multi-mode mobile terminal (100) having at least two identity card slots (110, 120), comprising:
ruling out incompatible communication modes combinations so as to prevent selection of an unavailable communication mode combination;
displaying (S520) a mode selection screen (210) composed of a first display window for presenting at least one primary available communication mode selectable from at least one identity card detected in the identity card slots (110, 120) and a second display window for presenting at least one secondary available communication mode selectable from the at least one identity card; and
selecting a network corresponding to a communication mode selected on the mode selection screen.

2. The method of claim 1, wherein displaying (S520) a mode selection screen (210) comprises at least two among a code division multiple access, CDMA, mode, a global system for mobile communications, GSM, mode, a wireless broadband, WiBro, mode, and a high speed downlink packet access, HSDPA, mode.

3. The method of any of claims 1 and 2, wherein displaying (S520) a mode selection screen (210) comprises disabling (220), when one of the at least one primary communication mode is selected, secondary communication mode incompatible with the selected primary communication mode.

4. The method of claim 2, wherein displaying (S520) a mode selection screen comprises presenting (420) available combinations of the primary and secondary communication modes in response to an available combination request command.

5. The method of claim 4, wherein the available combinations of the primary and secondary communication modes are determined on the basis of communication modes supported by the at least one identity card detected in the identity card slots (110, 120) and previously stored mode combination information.

6. The method of any of claims 1 to 5, wherein the communication mode selection is performed when the mobile terminal (100) boots up or a mode selection option is set up.

7. The method of any of claims 1 to 6, wherein the primary and secondary communication modes comprise a code division multiple access, CDMA, mode, a global system for mobile communications, GSM, mode, a wireless broadband, WiBro, mode, and a high speed downlink packet access, HSDPA, mode.

8. The method of claim 1, further comprising displaying, if a mode selection command is detected, a mode selection screen presenting at least one network operator mode selectable from the at least one identity cards detected in the identity card slots (110, 120).

9. A dual-mode mobile terminal (100) having at least two identity card slots (110, 120), a first communication module (130) for processing signals in a first communication mode, and a second communication module (140) for processing signals in a second communication mode, comprising:
a display unit (160) for displaying a mode selection screen (210) ;
a storage unit (170) for storing information on available identity cards and communication mode combinations; and
a control unit (180) for
ruling out incompatible communication modes combinations so as to prevent selection of an unavailable communication mode combination,
controlling the display unit (160) to display the mode selection screen (210) composed of a first display window for presenting at least one primary available communication mode selectable from at least one identity card detected in the identity card slots (110, 120) and a second display window for presenting at least one secondary available communication mode selectable from the at least one identity card, and
controlling the first (130) and second (140) communication modules to select a network corresponding to a communication mode selected on the mode selection screen (210).

10. The dual-mode mobile terminal of claim 9, wherein the control unit (180) is configured to select, when a primary communication mode is selected on the mode selection screen (210), a secondary communication mode compatible with the primary communication mode.

11. The dual-mode mobile terminal of claim 9 or 10, wherein the control unit (180) is configured to disable, when the primary communication mode is selected, secondary communication modes incompatible with the selected primary communication mode.

12. The dual-mode mobile terminal of claim 9, further comprising an input unit (150), wherein the control unit (180) is configured to detect an available mode combination request command input through the input unit, and control the display unit to display (420) available combinations of the primary and secondary communication modes in response to the available mode combination request command.

13. The dual-mode mobile terminal of any of claims 9 and 12, wherein the control unit (180) is configured to control the display unit (160) to determine the available combinations of the communication modes on the basis of communication modes supported by the at least one identity card detected in the identity card slots (110, 120) and previously stored mode combination information.

## Patentansprüche

1. Verfahren zur Bereitstellung eines Kommunikationsmodus eines mobilen Mehrmoden-Endgeräts (100), das mindestens zwei Ausweissteckplätze (110, 120) aufweist, wobei das Verfahren Folgendes umfasst:
Ausschließen inkompatibler Kombinationen von Kommunikationsmodi, um die Auswahl einer nicht verfügbaren Kombination von Kommunikationsmoden zu verhindern;
Anzeigen (S520) eines Moden-Auswahlbildschirms (210), der aus Folgendem besteht: einem ersten Anzeigefenster zur Darstellung mindestens eines primären verfügbaren Kommunikationsmodus, der aus mindestens einem Ausweis ausgewählt werden kann, der in den Ausweisschlitzen (110, 120) erfasst wird, und einem zweiten Anzeigefenster zur Darstellung mindestens eines sekundären verfügbaren Kommunikationsmodus, der aus dem mindestens einen Ausweis ausgewählt werden kann; und
Auswählen eines Netzwerks, das einem Kommunikationsmodus entspricht, der auf dem Modusauswahlbildschirm ausgewählt wird.

2. Verfahren nach Anspruch 1, wobei das Anzeigen (S520) eines Modusauswahlbildschirms (210) mindestens zwei von Folgendem umfasst: einen Modus des Codemultiplex-Vielfachzugriffs, (Code Division Multiple Access - CDMA), einen Modus des globalen Systems für mobile Kommunikation (Global System for Mobile Communications - GSM), einen Modus für drahtloses Breitband (Wireless Broadband - WiBro) und einen Modus des Hochgeschwindigkeits-Downlink-Paketzugriffs (High Speed Downlink Packet Access - HSDPA).

3. Verfahren nach einem der Ansprüche 1 und 2, wobei das Anzeigen (S520) eines Modusauswahlbildschirms (210) Folgendes umfasst: Deaktivieren (220), wenn einer des mindestens einen primären Kommunikationsmodus ausgewählt ist, des sekundären Kommunikationsmodus, der mit dem ausgewählten primären Kommunikationsmodus inkompatibel ist.

4. Verfahren nach Anspruch 2, wobei das Anzeigen (S520) eines Modusauswahlbildschirms Folgendes umfasst: Präsentieren (420) verfügbarer Kombinationen des primären und sekundären Kommunikationmodus als Reaktion auf einen Anforderungsbefehl für verfügbare Kombinationen.

5. Verfahren nach Anspruch 4, wobei die verfügbaren Kombinationen des primären und sekundären Kommunikationsmodus basierend auf Folgendem bestimmt werden: Kommunikationsmodi, die von dem mindestens einen Ausweis unterstützt werden, der in den Ausweisschlitzen (110, 120) erfasst wurde, sowie zuvor gespeicherten Informationen über Moduskombinationen.

6. Verfahren nach einem der Ansprüche 1 bis 5, wobei die Kommunikationsmodusauswahl durchgeführt wird, wenn das mobile Endgerät (100) bootet oder eine Modusauswahloption eingerichtet wird.

7. Verfahren nach einem der Ansprüche 1 bis 6, wobei der primäre und sekundäre Kommunikationsmodus Folgendes umfassen: einen Modus des Codemultiplex-Vielfachzugriffs, CDMA, einen Modus des globalen Systems für mobile Kommunikation, GSM, einen Modus für drahtloses Breitband, WiBro, und einen Modus des Hochgeschwindigkeits-Downlink-Paketzugriffs, HSDPA.

8. Verfahren nach Anspruch 1, das ferner Folgendes umfasst: wenn ein Modusauswahlbefehl erfasst wird, Anzeigen eines Modusauswahlbildschirms, der mindestens einen Netzbedienermodus präsentierent, der aus dem mindestens einem Ausweis ausgewählt werden kann, der in den Ausweisschlitzen (110, 120) erfasst wird.

9. Mobiles Dualmodus-Endgerät (100), das mindestens Folgendes aufweist:
zwei Ausweissteckplätze (110, 120), ein erstes Kommunikationsmodul (130) zur Verarbeitung von Signalen in einem ersten Kommunikationsmodus und ein zweites Kommunikationsmodul (140) zur Verarbeitung von Signalen in einem zweiten Kommunikationsmodus, wobei das mobile Dualmodus-Endgerät Folgendes umfasst:
eine Anzeigeeinheit (160) zum Anzeigen eines Modusauswahlbildschirms (210);
eine Speichereinheit (170) zum Speichern von Informationen über verfügbare Ausweise und Kommunikationsmodus-Kombinationen; und
eine Steuereinheit (180) zum Ausschließen inkompatibler Kommunikationsmoduskombinationen, um die Auswahl einer nicht verfügbaren Kombination von Kommunikationsmoden zu verhindern,
Steuern der Anzeigeeinheit (160) zur Anzeige des Modusauswahlbildschirms (210), der aus Folgendem besteht: einem ersten Anzeigefenster zur Darstellung mindestens eines primären verfügbaren Kommunikationsmodus, der aus mindestens einem Ausweis ausgewählt werden kann, der in den Ausweisschlitzen (110, 120) erfasst wird, und einem zweiten Anzeigefenster zur Darstellung mindestens eines sekundären verfügbaren Kommunikationsmodus, der aus dem mindestens einen Ausweis ausgewählt werden kann, und
Steuern des ersten (130) und zweiten (140) Kommunikationsmoduls, zum Auswählen eines Netzwerks, das einem Kommunikationsmodus entspricht, der auf dem Modusauswahlbildschirm (210) ausgewählt wird.

10. Mobiles Dualmodus-Endgerät nach Anspruch 9, wobei die Steuereinheit (180) dafür konfiguriert ist, wenn ein primärer Kommunikationsmodus auf dem Modusauswahlbildschirm (210) ausgewählt wird, einen sekundären Kommunikationsmodus auszuwählen, der mit dem primären Kommunikationsmodus kompatibel ist.

11. Mobiles Dualmodus-Endgerät nach Anspruch 9 oder 10, wobei die Steuereinheit (180) dafür konfiguriert ist, wenn der primäre Kommunikationsmodus ausgewählt ist, den sekundären Kommunikationsmodus zu deaktivieren, der mit dem ausgewählten primären Kommunikationsmodus inkompatibel ist.

12. Mobiles Dualmodus-Endgerät nach Anspruch 9, das ferner eine Eingabeeinheit (150) umfasst, wobei die Steuereinheit (180) für Folgendes konfiguriert ist: Erfassen eines Anforderungsbefehls für verfügbare Moduskombinationen, der über die Eingabeeinheit eingegeben wird, und Steuern der Anzeigeeinheit (420), so dass sie verfügbare Kombinationen des primären und sekundären Kommunikationsmodus als Reaktion auf einen Anforderungsbefehl für verfügbare Moduskombinationen anzeigt.

13. Mobiles Dualmodus-Endgerät nach einem der Ansprüche 9 und 12, wobei die Steuereinheit (180) für Folgendes konfiguriert ist: Steuern der Anzeigeeinheit (160), um die verfügbaren Kombinationen der Kommunikationsmodi basierend auf Folgendem zu bestimmen: Kommunikationsmodi, die von dem mindestens einen Ausweis unterstützt werden, der in den Ausweisschlitzen (110, 120) erfasst wurde, sowie zuvor gespeicherten Informationen über Moduskombinationen.

## Revendications

1. Un procédé de fourniture d'un mode de communication d'un terminal mobile à modes multiples (100) possédant au moins deux fentes de carte d'identité (110, 120), comprenant :
l'exclusion de combinaisons de modes de communication incompatibles de façon à empêcher la sélection d'une combinaison de modes de communication non disponible,
l'affichage (S520) d'un écran de sélection de mode (210) composé d'une première fenêtre d'affichage destinée à la présentation d'au moins un mode de communication disponible primaire pouvant être sélectionné à partir d'au moins une carte d'identité détectée dans les fentes de carte d'identité (110, 120) et une deuxième fenêtre d'affichage destinée à la présentation d'au moins un mode de communication disponible secondaire pouvant être sélectionné à partir de la au moins une carte d'identité, et
la sélection d'un réseau correspondant à un mode de communication sélectionné sur l'écran de sélection de mode.

2. Le procédé selon la Revendication 1, où l'affichage (S520) d'un écran de sélection de mode (210) comprend au moins deux modes parmi un mode accès multiple par code de répartition, CDMA, un mode système mondial pour télécommunications mobiles, GSM, un mode large bande sans fil, WiBro, et un mode accès par paquets en liaison descendante haut débit, HSDPA.

3. Le procédé selon l'une quelconque des Revendications 1 et 2, où l'affichage (S520) d'un écran de sélection de mode (210) comprend la désactivation (220), lorsqu'un des au moins un mode de communication primaire est sélectionné, d'un mode de communication secondaire incompatible avec le mode de communication primaire sélectionné.

4. Le procédé selon la Revendication 2, où l'affichage (S520) d'un écran de sélection de mode comprend la présentation (420) de combinaisons disponibles des modes de communication primaires et secondaires en réponse à une commande de demande de combinaisons disponibles.

5. Le procédé selon la Revendication 4, où les combinaisons disponibles des modes de communication primaires et secondaires sont déterminées en fonction de modes de communication pris en charge par la au moins une carte d'identité détectée dans les fentes de carte d'identité (110, 120) et d'informations de combinaison de modes antérieurement conservées en mémoire.

6. Le procédé selon l'une quelconque des Revendications 1 à 5, où la sélection de mode de communication est exécutée lorsque le terminal mobile (100) est initialisé ou qu'une option de sélection de mode est définie.

7. Le procédé selon l'une quelconque des Revendications 1 à 6, où les modes de communication primaires et secondaires comprennent un mode accès multiple par code de répartition, CDMA, un mode système mondial pour télécommunications mobiles, GSM, un mode large bande sans fil, WiBro, et un mode accès par paquets en liaison descendante haut débit, HSDPA.

8. Le procédé selon la Revendication 1, comprenant en outre l'affichage, si une commande de sélection de mode est détectée, d'un écran de sélection de mode présentant au moins un mode opérateur de réseau pouvant être sélectionné à partir de la au moins une carte d'identité détectée dans les fentes de carte d'identité (110, 120).

9. Un terminal mobile bimode (100) possédant au moins deux fentes de carte d'identité (110, 120), un premier module de communication (130) destiné au traitement de signaux dans un premier mode de communication et un deuxième module de communication (140) destiné au traitement de signaux dans un deuxième mode de communication, comprenant :
une unité d'affichage (160) destinée à l'affichage d'un écran de sélection de mode (210),
une unité d'espace mémoire (170) destinée à la conservation en mémoire d'informations relatives à des combinaisons de cartes d'identité et de modes de communication disponibles, et
une unité de commande (180) destinée à
l'exclusion de combinaisons de modes de communication incompatibles de façon à empêcher la sélection d'une combinaison de modes de communication non disponible,
la commande de l'unité d'affichage (160) de façon à afficher l'écran de sélection de mode (210) composé d'une première fenêtre d'affichage destinée à la présentation d'au moins un mode de communication disponible primaire pouvant être sélectionné à partir d'au moins une carte d'identité détectée dans les fentes de carte d'identité (110, 120) et une deuxième fenêtre d'affichage destinée à la présentation d'au moins un mode de communication disponible secondaire pouvant être sélectionné à partir de la au moins une carte d'identité, et
la commande des premier (130) et deuxième (140) modules de communication de façon à sélectionner un réseau correspondant à un mode de communication sélectionné sur l'écran de sélection de mode (210).

10. Le terminal mobile bimode selon la Revendication 9, où l'unité de commande (180) est configurée de façon à sélectionner, lorsqu'un mode de communication primaire est sélectionné sur l'écran de sélection de mode (210), un mode de communication secondaire compatible avec le mode de communication primaire.

11. Le terminal mobile bimode selon la Revendication 9 ou 10, où l'unité de commande (180) est configurée de façon à désactiver, lorsque le mode de communication primaire est sélectionné, des modes de communication secondaires incompatibles avec le mode de communication primaire sélectionné.

12. Le terminal mobile bimode selon la Revendication 9, comprenant en outre une unité d'entrée (150), où l'unité de commande (180) est configurée de façon à détecter une commande de demande de combinaisons de modes disponibles entrée par l'intermédiaire de l'unité d'entrée et à commander l'unité d'affichage de façon à afficher (420) des combinaisons disponibles des modes de communication primaires et secondaires en réponse à la commande de demande de combinaisons de modes disponibles.

13. Le terminal mobile bimode selon l'une quelconque des Revendications 9 et 12, où l'unité de commande (180) est configurée de façon à commander l'unité d'affichage (160) de façon à déterminer les combinaisons disponibles des modes de communication en fonction de modes de communication pris en charge par la au moins une carte d'identité détectée dans les fentes de carte d'identité (110, 120) et d'informations de combinaison de modes antérieurement conservées en mémoire.
